# EUROPEAN PATENT SPECIFICATION

(11) **EP 2 863 281 B1**
(45) Date of publication and mention of the grant of the patent: **15.11.2017**
(21) Application number: 14169705.2
(22) Date of filing: 23.05.2014
(51) Int. Cl.: G06F 9/445, G06F 9/44, G06F 3/0484, H04L 29/08, G05B 19/042

(54) **System and method to configure a field device**
System und Verfahren zur Konfigurierung einer Feldvorrichtung
Système et procédé permettant de configurer un dispositif de champ

(30) Priority: 18.10.2013 US 201314057645
(43) Date of publication of application: 22.04.2015
(73) Proprietor: Yokogawa Electric Corporation, Tokyo 180-8750 (JP)
(72) Inventor: Giango, Mamerto, 469270 Singapore (SG); Anne, Gowtham, 469270 Singapore (SG); Chan, Sin Wai, 469270 Singapore (SG)
(74) Representative: Henkel, Breuer & Partner

(56) References cited:
- WO-A2-2011/094667
- DE-A1-102011 079 756
- US-B1- 6 966 060

## Description

### FIELD OF INVENTION

This invention relates to a system and method to configure a field device in an industrial plant.

### BACKGROUND OF INVENTION

In a Distributed Control System for an industrial plant, there are many field devices from various vendors. For a particular function, field devices from different vendors are installed, for example pressure control valves, temperature control valves, as such. All vendors create their own software application to represent and configure a specific field device. Each field device has a unique software application, each software application has a different usability and functionality, a user has to be trained for each software application and require the experience to be familiar with using the correct software application for each field device. Thus, a lot of effort and time is required to install and identify software applications for all field devices.

Various standards - Device Description (DD), Enhanced Device Description (EDD), Field Device Tool (FDT), Field Device Integration (FDI), as such are organized to address the above problems of providing unique software application to configure each field device. The various standards share a common method of confguring a field device. This method is done by using a system software application and a field device specific driver or software component. Field device vendor provides the driver or software component to be hosted on a system software application, which is provided by system software vendors. The driver or software component, which is hosted to the system software application, is used to configure the relevant field device.

Using FDT technology as an example, it is established to standardize the communication and configuration interface between all field devices and host systems. Field device vendors create a driver, known as Device Type Manager (DTM), and system vendors create a host application, known as Frame Application, for hosting the drivers.

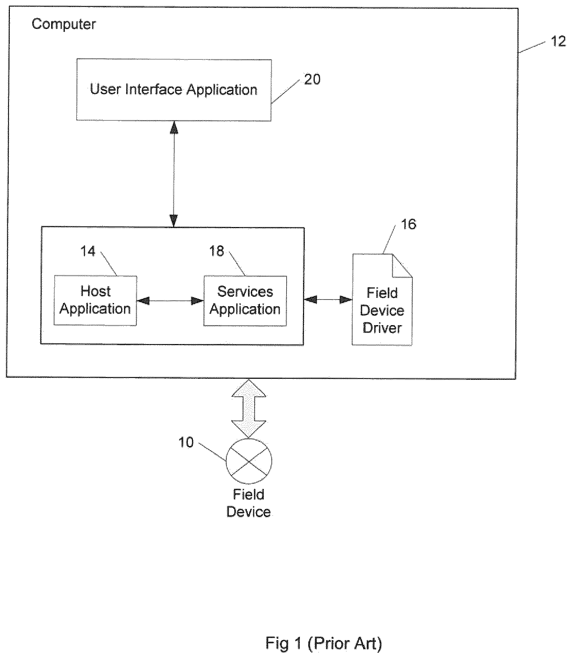

Fig 1 illustrates a system in a prior art for configuring a field device 10. The field device 10 is connected to a destination apparatus 12, such as a computer. A user has to install a host application 14 and a field device driver 16 to configure the field device 10 using the destination apparatus 12. For some field devices 10, a field device driver 16 catalog has to be updated for the host application 14 to use the driver 16. After the installations are completed on the destination apparatus 12, the information of the field device 10 is shown on a User Interface 20 of the destination apparatus 12 for configuration or modification. The installations and configuration are done manually by the user for each new field device 10 on each destination apparatus 12.

A service is defined as an abstract resource that represents a capability of performing tasks that form a coherent functionality from the point of view of providers and requesters. To be used, a service must be realized by a concrete provider agent.

The services which are used for the installations and configurations are stored in a services application 18 to enable communications between the field device 10, host application 14 and field device driver 16 or driver 16 in the catalog.

In an example scenario, before the user conducts a test or configuration on a field device 10 with ten destination apparatus 12, all the ten destination apparatus 12 have to be manually configured as described above.

In yet another scenario, when there is software enhancement to the host application 14, the user has to install the software enhancement manually to each destination apparatus 12.

Since host application installations, driver installations, updating of field device driver catalog, enhancement installations and configuration are done manually, it is very tedious when there are many field devices 10 and/or many destination apparatus 12 which need to be manually modified. There is a need for improvements in this aspect.

DE 10 2011 079756 A1 discloses a device having interpreter device drivers implementing a frame application of a plant asset management tool. Electronic device descriptions are translated by an interpreter of the tool, where the device generates menu options in the tool, and the menu options are selected by a user. An Internet and/or intranet connection to computerized maintenance management systems is made by the tool if the menu options are selected by the user. Data is exchanged between the tool and the management system. The Internet connection is World Wide Web, and the intranet connection is a local area network. The device drivers are in the form of device-specific software.

US 6 966 060 B1 discloses a method and system to remotely install management software on client machines of a network without requiring user-intervention such as a logon. A data discovery manager determines which discovered machines in a network should be configured for client installation, and queues a client configuration request (CCR) for each such machine. A client configuration manager dequeues each CCR, and attempts to establish a connection with the remote machine corresponding to the CCR. If successful, a bootstrap install service is downloaded to the client machine from a server having administrative rights, after which the bootstrap service is run to install the remainder of the management software on the client machine from a client access point server. If unsuccessful, retries may be attempted. Client machines having users with sufficient security rights may install the management software via a logon or other process at the client machine.

### SUMMARY OF THE INVENTION

Accordingly, there is provided a primary apparatus as set out in independent claim 1, a secondary apparatus as set out in independent claim 5, a system as set out in independent claim 6, and a computer-implemented method as set out in independent claim 7. Advantageous developments are defined in the dependent claims.

### DESCRIPTION OF THE FIGURES

In order that the present invention may be fully understood and readily put into practical effect, there shall now be described by way of non-limitative example only preferred embodiments of the present invention, the description being with reference to the accompanying illustrative figures.
- Figure 1: is an illustration of the prior art.
- Figure 2: is a process flow of the present invention.
- Figure 3: is block diagram of the present invention.
- Figure 4: is an example of a table in a field device driver catalog.

### DETAILED DESCRIPTION OF THE INVENTION

Reference will now be made in detail to the preferred embodiments of the invention, examples of which are illustrated in the accompanying drawings. While the invention will be described in conjunction with the preferred embodiments, it will be understood that they are not intended to limit the invention to these embodiments. On the contrary, the invention is intended to cover alternatives, modifications and equivalents, which may be included within the scope of the invention as defined by the appended claims. Furthermore, in the following detailed description of the present invention, numerous specific details are set forth in order to provide a thorough understanding of the present invention. However, it will be obvious to one of ordinary skill of the art that the present invention may be practiced without these specific details. In other instances, well known methods, procedures, components, and features have not been described in detail as not to unnecessarily obscure aspects of the present invention.

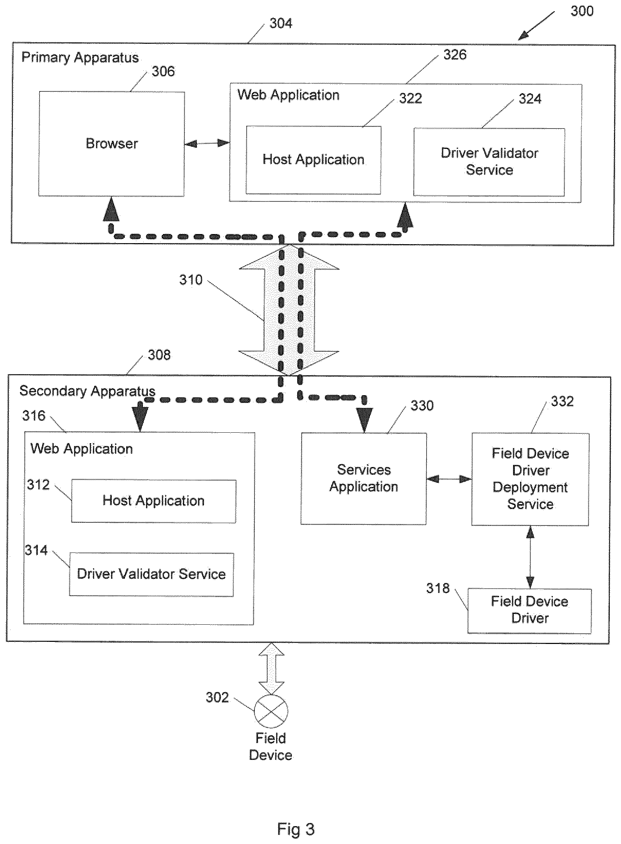

Referring to Fig 3, there is provided a system 300 to configure a field device 302 in a Distributed Control System ("DCS") of an industrial plant using a primary apparatus 304. The field device 302 can be connected to the secondary apparatus 308 by a network 310. The network 310 can be a physical connection which is wireless or wired, for example Ethernet, USB, and so forth. The network 310 can be either public or private.

The primary apparatus 304 is able to configure, test and/or monitor the field device 302. Examples of the primary apparatus 304 include, for example, personal computer, server, tablet, handheld apparatus, any such apparatus which includes a processer, display and an input means (including a touchscreen display) and so forth. Further, the primary apparatus 304 has an application 306 for accessing the secondary apparatus 308. Preferably, the application 306 is a browser which can be activated automatically on startup or by a user. The browser 306 can be any of Internet Explorer, Chrome, Firefox, Safari, as such.

The primary apparatus 304 is in communication with a secondary apparatus 308 through the network 310. The secondary apparatus 308 can be, for example, a personal computer, server, any such apparatus which has at least a processor, storage for storing at least a field device driver 318, a web application 316 and a host application 312, in the form of a User Interface for configuring the field device 302.

Web Application can be represented as a hierarchy of directories and files (unpacked form) or a file reflecting the same hierarchy (packed form). Web Application is a deployable package which contains:
- Web components. A Web component is defined as a server-side object used by a Web-based client (browsers) to interact with host applications.
- Static resource files such as images
- Helper classes
- Libraries
- Deployment descriptor (.xml file)

The web application 316 includes the host application 312 and a driver validator service 314. The driver validator service 314 determines if the relevant device driver 318 for the field device 302 is available on the apparatus which the driver validator is located. In this case, it is the secondary apparatus 308. The determination is done by searching a field device driver 318 catalog or database.

The user uses the browser 306 on primary apparatus 304 to access the web application 316 on the secondary apparatus 308 using a uniform resource locator, abbreviated URL, also known as web address, through the network 310. A duplicate of the web application 316 is deployed to the primary apparatus 304 as deployed web application 326. If the deployed web application 326 is already in the primary apparatus 304, the browser 306 will activate the deployed web application 326.

When the web application 326 is deployed on the primary apparatus 304, the driver validator service 314 on the secondary apparatus 308 is deployed as driver validator service 324. The driver validator service 324 determines if the relevant device driver 318 for the field device 302 is available on the primary apparatus 304. The host application 322 is automatically activated as a User Interface 322 on the primary apparatus 304 to configure the field device 302. This improves efficiency of configuring the field device 302 by reducing the effort of the user to manually install the relevant field device driver 318 and host application 322 and then to manually activate the host application 322 as a User Interface to configure the field device.

The field device driver 318 is required to configure the field device 302 and can be in the format of a Device Description ("DD"), Device Type Manager ("DTM"), Field Device Integration ("FDI") Device Package, as such. The field device driver 318 is stored in memory storage of the secondary apparatus 308. In some cases the field device driver 318 has multiple components. For such cases, the field device driver 318 is referred to as a field device driver package. The determination is based on each component which is required for the configuration of the field device 302. The availability of all the required components is determined by the web application 326. Usually, there are multiple field device drivers 318, each for a type of field device 302, since an industrial plant has multiple types of field devices 302. The field device drivers 318 are stored in a database and a field device driver 318 catalog lists the available field device drivers 318 for the various field devices 302.

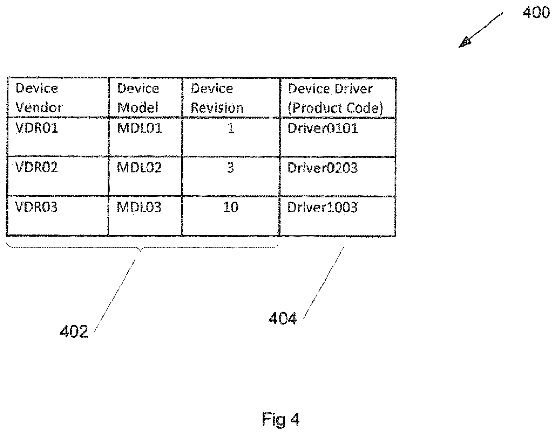

Fig 4 illustrates an example of a lookup table 400 in the field device driver 318 catalog. Column 402 is a listing of type identifiers for field devices 302, examples of type identifiers are manufacturer, model and revision. Column 404 is the corresponding field device driver 318.

The secondary apparatus 308 includes a services application 330 which stores services used for installation, configuration and modification of the field device 302. The services are to enable communication among the field device 302, the primary apparatus 304, the secondary apparatus 308 and any other components in the primary apparatus 304 and the secondary apparatus 308.

A field device driver deployment service 332 enables the relevant field device driver 318 to be transferred to the primary apparatus 304 automatically when necessary. The advantage is when the User Interface 322 is activated, the user can proceed with the configuration thus saving time and effort to transfer the field device driver 318 manually.

Other services provided by the services application 330 include an authentication service. The authentication service checks if the user who is logged in on the primary apparatus 304 is allowed to access the services application 330. The checking is done by comparing the logged in user with a list of users who have access.

Another service is a device communication service which enables sending and receiving messages between the User Interface 322 and the services application 330. A session manager service is provided to manage the primary apparatus 304 connection with the services application 330.

The services application 330 is in communication with the primary apparatus 304 and its components using the network 310.

A plurality of browsers 306 can be provided on the primary apparatus 304, where each browser is used to configure a different field device. Alternatively, the browser can have a plurality of tabs, each tab for configuring a different field device. Advantageously, several field devices can be configured simultaneously.

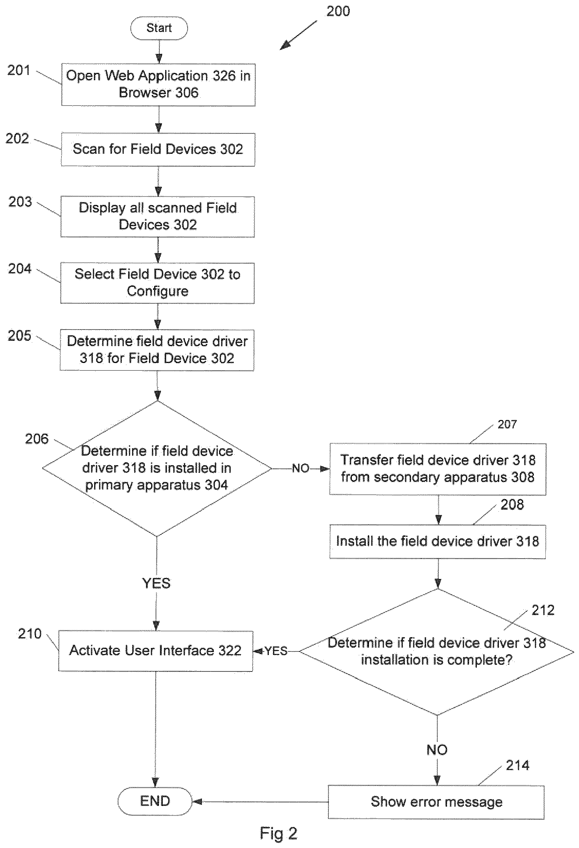

Referring to Fig. 2, there is provided a computer-implemented method 200 in the system 300 to configure the field device 302 using the primary apparatus 304. In Step 201, a user activates the browser 306 on the primary apparatus 304.

In step 202, the field device(s) 302 are scanned by the secondary apparatus 308. The identification can be done for an online mode or an offline mode. In an online mode, the primary apparatus 304, secondary apparatus 308 and field device(s) 302 are connected to the network 310. In an offline mode, the primary apparatus 304 and secondary apparatus 308 are connected to the network 310, the field device(s) 302 are not connected to the network 310 and a database of field device(s) 302 is available for access by the secondary apparatus 308. The database of field device(s) can be on primary apparatus 304, secondary apparatus 308 or any other external storage accessible on the network 310.

For the online mode, the scanning is done in the network 310 to identify the field device(s) 302. For the offline mode, the scanning is done in the database.

A listing of the scanned field device(s) 302 is provided in Step 203. In step 204, the user is able to select the desired field device(s) 302 for configuration.

In Step 205, services in the services application 330 enable the deployed web application 326 in the primary apparatus 304 to communicate with the secondary apparatus 308 to determine the field device driver 318 which is required for configuration of the field device 302. The determination is based on each component which is required for the configuration of the field device 302. The availability of all the required components is determined by the web application 326.

Alternatively, Step 205 identifies a relevant field device driver 318 for the field device 302 from the field device driver 318 catalog. The identification may be done by matching with the field device driver 318 for configuring the selected field device 302. The identification can be done by using the lookup table 400 which lists the field device driver 318 corresponding or relevant to the field device 302 by type identifiers 402.

Step 206 is carried out by the driver validator service 324 in the primary apparatus 304 to determine if the identified relevant field device driver 318 is installed on the primary apparatus 304.

If the identified relevant field device driver 318 is not installed on the primary apparatus 304, a copy of the field device driver 318 is transferred from the secondary apparatus 308 to the primary apparatus 304 as shown in Step 207. After the transfer, Step 208 installs the transferred field device driver 318 in the primary apparatus 304. Step 212 determines whether the installation of the transferred field device driver 318 has been carried out successfully. Advantageously, the user does not have to locate the requisite field device driver 318 and carry out the field device driver 318 installation manually. If the installation of the transferred field device driver 318 has been deemed to be unsuccessful, the process ends with an error message to the user. Such an error message can be stating the error and/or identifying the source of the error.

Step 210 automatically activates and displays user interface 322 to configure the selected field device 302. The User Interface 322 is displayed when the relevant field device driver 318 is determined to be already installed in the primary apparatus 304.

When the user wants to configure multiple field devices 302 on the primary apparatus 304 at the same time, one User Interface 322 is provided for each field device 302. Each User Interface 322 may be provided on a separate browser window or separate tabs on one browser window.

Using the present invention to configure a field device 302, there is no need to install multiple host applications 322 or a database of field device drivers 318. Only the relevant field device driver 318 is transferred automatically to the primary apparatus 304 for installation. This reduces the requirement of data storage on the primary apparatus 304. Thus, any mobile apparatus such as a tablet or handheld apparatus is suitable for use as a primary apparatus 304. This increases the user convenience for field device configuration/ monitoring which can be done at any location, remotely or locally.

Further, when the host application 322 carries out processing on the secondary apparatus 308, the primary apparatus 304 can operate with a lower processing capability. This allows for flexibility in choosing the type of primary apparatus 304.

## Claims

1. A primary apparatus (304) to configure a field device (302) in an industrial plant, the primary apparatus (304) comprising:
an application (306) for accessing a secondary apparatus (308), the secondary apparatus (308) including
a web application (316) having a host application (312) and a driver validator service (314),
a field device driver deployment service (332), and
a relevant field device driver (318) for configuring the field device;
**characterized by**
a deployed web application (326) received from the secondary apparatus (308), the deployed web application (326) having a user interface (322) and a driver validator service (324);
wherein when the driver validator service (324) on the primary apparatus (304) determines that a relevant field device driver for the field device is not in the primary apparatus (304), the field device driver deployment service (332) is activated by the driver validator service (324) on the primary apparatus (304) to transfer the relevant field device driver (318) from the secondary apparatus (308) to the primary apparatus (304), and
when the relevant field device driver (318) is transferred to the primary apparatus (304), the user interface (322) application is activated on the primary apparatus (304) to configure a field device (302).

2. The apparatus (304) as claimed in claim 1 wherein the application (306) is a browser to access the secondary apparatus (308) on a network.

3. The apparatus (304) as claimed in claim 1 wherein the deployed web application (326) is a duplicate of the web application (316) in the secondary apparatus (308).

4. The apparatus (304) as claimed in claim 2 wherein the deployed web application (326) is the web application (316) on the secondary apparatus (308) which is accessed through the browser on the primary apparatus (304).

5. A secondary apparatus (308) to configure a field device (302) in an industrial plant using a primary apparatus (304), the secondary apparatus (308) comprising
a web application (316) for deploying to the primary apparatus (304), the web application (316) having a host application (312) and a driver validator service (314); and
a relevant field device driver (318);
**characterized by**
a field device driver deployment service (332) for transferring the relevant field device driver (318) from the secondary apparatus (308) to the primary apparatus (304) to configure the field device (302).

6. A system (300) to configure a field device (302), the system (300) comprising the primary apparatus (304) of claim 1 and the secondary apparatus (308) of claim 5.

7. A computer-implemented method to configure at least one field device (302) in an industrial plant using a primary apparatus (304) comprising
accessing a secondary apparatus (308), the secondary apparatus (308) comprising a web application (316) having a host application (312) and a driver validator service (314);
**characterized by**
determining whether a relevant field device driver for the at least one field device is in the primary apparatus (304);
transferring and installing the field device driver (318) from the secondary apparatus (308) to the primary apparatus (304) when the relevant field device driver is not in the primary apparatus (304); and
activating a user interface to configure the at least one field device (302).

8. The method as claimed in claim 7 wherein the primary apparatus (304) uses a browser for accessing the secondary apparatus (308) on a network.

9. The method as claimed in claim 7 further includes identifying the at least one field device (302) for configuration.

## Patentansprüche

1. Primärvorrichtung (304) zum Konfigurieren einer Feldvorrichtung (302) in einer industriellen Anlage, wobei die Primärvorrichtung (304) aufweist:
eine Anwendung (306) zum Zugreifen auf eine Sekundärvorrichtung (308), wobei die Sekundärvorrichtung (308) umfasst
eine Web-Anwendung (316) mit einer Host-Anwendung (312) und einem Antreiberprüfdienst (314),
einen Feldvorrichtungs-Antreibereinsatzdienst (332), und
einen relevanten Feldvorrichtungsantreiber (318) zum Konfigurieren der Feldvorrichtung;
**gekennzeichnet durch**
eine eingesetzte Web-Anwendung (326), die von der Sekundärvorrichtung (308) empfangen ist, wobei die eingesetzte Web-Anwendung (326) eine Nutzerschnittstelle (322) und einen Antreiberprüfdienst (324) aufweist;
wobei, wenn der Antreiberprüfdienst (324) bezüglich der Primärvorrichtung (304) bestimmt, dass ein relevanter Feldvorrichtungsantreiber für die Feldvorrichtung nicht in der Primärvorrichtung (304) vorliegt, dann wird der Feldvorrichtungs-Antreibereinsatzdienst (332) durch den Antreiberprüfdienst (324) bezüglich der Primärvorrichtung (304) aktiviert, um den relevanten Feldvorrichtungsantreiber (318) von der Sekundärvorrichtung (308) zu der Primärvorrichtung (304) zu übertragen, und
wenn der relevante Feldvorrichtungsantreiber (318) zu der Primärvorrichtung (304) übertragen wird, dann wird die Nutzerschnittstellenanwendung (322) bezüglich der Primärvorrichtung (304) aktiviert, um eine Feldvorrichtung (302) zu konfigurieren.

2. Vorrichtung (304) nach Anspruch 1, wobei die Anwendung (306) ein Browser ist, um auf die Sekundärvorrichtung (308) bezüglich eines Netzwerks zuzugreifen.

3. Vorrichtung (304) nach Anspruch 1, wobei die eingesetzte Web-Anwendung (326) ein Duplikat der Web-Anwendung (316) in der Sekundärvorrichtung (308) ist.

4. Vorrichtung (304) nach Anspruch 2, wobei die eingesetzte Web-Anwendung (326) die Web-Anwendung (316) bezüglich der Sekundärvorrichtung (308) ist, auf welche durch den Browser bezüglich der Primärvorrichtung (304) zugegriffen wird.

5. Sekundärvorrichtung (308) zum Konfigurieren einer Feldvorrichtung (302) in einer industriellen Anlage unter Verwendung einer Primärvorrichtung (304), wobei die Sekundärvorrichtung (308) aufweist:
eine Web-Anwendung (316) zum Einsetzen in die Primärvorrichtung (304), wobei die Web-Anwendung (316) eine Host-Anwendung (312) und einen Antreiberprüfdienst (314) aufweist; und
einen relevanten Feldvorrichtungsantreiber (318);
**gekennzeichnet durch**
einen Feldvorrichtungs-Antreibereinsatzdienst (332) zum Übertragen des relevanten Feldvorrichtungsantreibers (318) von der Sekundärvorrichtung (308) zu der Primärvorrichtung (304), um die Feldvorrichtung (302) zu konfigurieren.

6. System (300) zum Konfigurieren einer Feldvorrichtung (302), wobei das System (300) die Primärvorrichtung (304) nach Anspruch 1 und die Sekundärvorrichtung (308) nach Anspruch 5 aufweist.

7. Computerimplementiertes Verfahren zum Konfigurieren zumindest einer Feldvorrichtung (302) in einer industriellen Anlage unter Verwendung einer Primärvorrichtung (304), aufweisend:
Zugreifen auf eine Sekundärvorrichtung (308), wobei die Sekundärvorrichtung (308) eine Web-Anwendung (316) mit einer Host-Anwendung (312) und einem Antreiberprüfdienst (314) aufweist;
**gekennzeichnet durch**
Bestimmen, ob ein relevanter Feldvorrichtungsantreiber für die zumindest eine Feldvorrichtung in der Primärvorrichtung (304) vorliegt;
Übertragen und Installieren des Feldvorrichtungsantreibers (318) von der Sekundärvorrichtung (308) zu der Primärvorrichtung (304), wenn der relevante Feldvorrichtungsantreiber nicht in der Primärvorrichtung (304) vorliegt; und
Aktivieren einer Nutzerschnittstelle zum Konfigurieren der zumindest einen Feldvorrichtung (302).

8. Verfahren nach Anspruch 7, wobei die Primärvorrichtung (304) einen Browser zum Zugreifen auf die Sekundärvorrichtung (308) bezüglich eines Netzwerks verwendet.

9. Verfahren nach Anspruch 7, ferner mit einem Identifizieren der zumindest einen Feldvorrichtung (302) für eine Konfiguration.

## Revendications

1. Appareil principal (304) destiné à configurer un dispositif de terrain (302) dans une installation industrielle, l'appareil principal (304) comprenant :
une application (306) destinée à accéder à un appareil secondaire (308), l'appareil secondaire (308) comprenant :
une application Web (316) qui possède une application hôte (312) et un service de validation de pilote (314),
un service de déploiement de pilote de dispositif de terrain (332), et
un pilote de dispositif de terrain approprié (318) destiné à configurer le dispositif de terrain;
**caractérisé par** :
une application Web déployée (326) reçue de la part de l'appareil secondaire (308), l'application Web déployée (326) ayant une interface utilisateur (322) et un service de validation de pilote (324) ;
dans lequel, lorsque le service de validation de pilote (324), situé sur l'appareil principal (304), détermine qu'un pilote de dispositif de terrain approprié pour le dispositif de terrain ne se trouve pas dans l'appareil principal (304), le service de déploiement de pilote de dispositif de terrain (332) est activé par le service de validation de pilote (324) sur l'appareil principal (304), afin de transférer le pilote de dispositif de terrain approprié (318) depuis l'appareil secondaire (308) vers l'appareil principal (304), et
lorsque le pilote de dispositif de terrain approprié (318) est transféré vers l'appareil principal (304), l'application d'interface utilisateur (322) est activée sur l'appareil principal (304) afin de configurer un dispositif de terrain (302).

2. Appareil (304) selon la revendication 1, dans lequel l'application (306) est un navigateur qui permet d'accéder à l'appareil secondaire (308) sur un réseau.

3. Appareil (304) selon la revendication 1, dans lequel l'application Web déployée (326) est une réplique de l'application Web (316) dans l'appareil secondaire (308).

4. Appareil (304) selon la revendication 2, dans lequel l'application Web déployée (326) est l'application Web (316) sur l'appareil secondaire (308) qui est accessible par le biais du navigateur sur l'appareil principal (304).

5. Appareil secondaire (308) destiné à configurer un dispositif de terrain (302) dans une installation industrielle en utilisant un appareil principal (304), l'appareil secondaire (308) comprenant
une application Web (316) destinée à être déployée vers l'appareil principal (304), l'application Web (316) ayant une application hôte (312) et un service de validation de pilote (314) ; et
un pilote de dispositif de terrain approprié (318) ;
**caractérisé par**
un service de déploiement de pilote de dispositif de terrain (332) destiné à transférer le pilote de dispositif de terrain approprié (318) depuis l'appareil secondaire (308) vers l'appareil principal (304) afin de configurer le dispositif de terrain (302).

6. Système (300) destiné à configurer un dispositif de terrain (302), le système (300) comprenant l'appareil principal (304) selon la revendication 1 et l'appareil secondaire (308) selon la revendication 5.

7. Procédé mis en oeuvre par ordinateur destiné à configurer au moins un dispositif de terrain (302) dans une installation industrielle, en utilisant un appareil principal (304), comprenant :
l'accès à un appareil secondaire (308), l'appareil secondaire (308) comprenant une application Web (316) qui possède une application hôte (312) et un service de validation de pilote (314) ;
**caractérisé par**
la détermination du fait qu'un pilote de dispositif de terrain approprié pour l'au moins un dispositif de terrain se trouve, ou non, dans l'appareil principal (304) ;
le transfert et l'installation du pilote de dispositif de terrain (318), depuis l'appareil secondaire (308) vers l'appareil principal (304), lorsque le pilote de dispositif de terrain approprié ne se trouve pas dans l'appareil principal (304) ; et
l'activation d'une interface utilisateur afin de configurer l'au moins un dispositif de terrain (302).

8. Procédé selon la revendication 7, dans lequel l'appareil principal (304) utilise un navigateur pour accéder à l'appareil secondaire (308) sur un réseau.

9. Procédé selon la revendication 7, qui comprend en outre l'identification de l'au moins un dispositif de terrain (302) pour la configuration.
